# EUROPEAN PATENT SPECIFICATION

(11) **EP 2 133 296 B1**
(45) Date of publication and mention of the grant of the patent: **24.10.2018**
(21) Application number: 09152788.7
(22) Date of filing: 13.02.2009
(51) Int. Cl.: B65H 3/12, B65H 7/16, B65H 7/02

(54) **Mail feeding device**
Postzuführungsvorrichtung
Dispositif d'alimentation de courriers

(30) Priority: 11.06.2008 JP 2008153037
(43) Date of publication of application: 16.12.2009
(73) Proprietor: Kabushiki Kaisha Toshiba, Minato-ku, Tokyo 105-8001 (JP)
(72) Inventor: Mitsuya, Yusuke, Tokyo 105-8001 (JP); Naruoka, Yoshihiko, Tokyo 105-8001 (JP)
(74) Representative: Horn Kleimann Waitzhofer Patentanwälte PartG mbB

(56) References cited:
- EP-A2- 0 990 609
- EP-A2- 1 837 296
- JP-A- 3 120 132
- JP-U- 59 146 337
- US-A- 2 856 187

## Description

The present invention relates to a mail feeding device for feeding a plurality of accumulated mail items one by one.

A mail feeding device is known in which a belt with holes is run along mail items to hold them one by one, using a suction nozzle provided at the reverse side of the belt, thereby sequentially picking up them (see, for example, USP 5,391,051). In this device, a solenoid valve for executing on/off control of negative pressure is provided between a vacuum tank and the suction nozzle.

In this structure, to pick up each mail item, the belt is run, the solenoid valve is opened, and the suction nozzle is operated to hold each mail item on the belt using a suction force. Further, to continuously feed mail items, the solenoid valve is closed regularly in accordance with the feeding timing of each mail item, thereby providing gaps between subsequently fed mail items.

However, in the above structure, even if the solenoid valve is closed to stop suction by the suction nozzle, negative pressure applied to a mail item cannot quickly be eliminated where the mail item is held by the belt by a suction force. Accordingly, even if the on/off cycle of the solenoid valve is shortened to feed mail items at high speed, high-speed feeding of mail items cannot be realized since negative pressure applied to the mail items cannot quickly be eliminated.

In US 2 856 187 A, a feeding device is provided for removing one workpiece at a time from a stack of workpieces, such as paper sheets, letter mail and the like, having various lengths in the direction of feed and in such manner that a gap of predetermined length is left between successive workpieces in the flow thereof from the stack.

In JP 59 146337 U, a mail feeding device is disclosed wherein negative pressure is used in several ways to separate individual mail items from a batch of mail items for further processing.

It is an object of the invention to provide a mail feeding device that can pick up accumulated mail items one by one at desired timing.

To attain the object, a mail feeding device according to an embodiment of the invention comprises: a pickup member including suction holes formed therein, and configured to run along one of accumulated mail items in a direction in which the one mail item is picked up, the one mail item being accumulated earliest and positioned at a pickup position; a negative-pressure chamber including an opening which opposes the pickup position with the pickup member interposed therebetween, the negative-pressure chamber applying negative pressure, via the suction holes, to the one mail item positioned at the pickup position, thereby making the one mail item to be held by the pickup member; drawing means which draw air from the negative-pressure chamber; a suction pipe connecting the drawing means to the negative-pressure chamber; a pressure adjustment unit configured to introduce air into the negative-pressure chamber, from which air was drawn by the drawing means, to increase internal pressure of the negative-pressure chamber toward atmospheric pressure; a conveyance section configured to receive the one mail item held on the pickup member by the negative pressure and picked up from the pickup position, and to convey the picked up mail item; a detector section configured to detect whether the picked up mail item has been transferred to the conveyance path; a controller configured to cause the pressure adjustment unit to increase the internal pressure of the negative-pressure chamber toward atmospheric pressure after the detector section detects that the picked up mail item has been transferred to the conveyance path, the pressure adjustment unit including an air supply unit configured to positively introduce air into the negative-pressure chamber, an air supply pipe provided separately from the suction pipe, the air supply pipe connecting the air supply unit to the negative-pressure chamber, and an on/off valve provided across the air supply pipe, the controller executing on/off control of the on/off valve.

In the above-described invention, since air is introduced into the negative-pressure chamber to positively eliminate negative pressure therein after a mail item picked up from the pickup position, held on the pickup member by the negative pressure of the negative-pressure chamber and picked up from the pickup position, is transferred to the conveyance section, subsequent mail items, which have been picked up unintentionally simultaneously with the first-mentioned mail item, are prevented from being rendered to the negative pressure of the negative-pressure chamber, whereby accumulated mail items can be quickly picked up one by one at desired timing.

The invention can be more fully understood from the following detailed description when taken in conjunction with the accompanying drawings, in which:
FIG. 1 is a schematic view illustrating a mail feeding device according to embodiments of the invention;
FIG. 2 is a block diagram illustrating a control system for controlling the operation of the mail feeding device shown in FIG. 1;
FIG. 3 is a fragmentary enlarged view illustrating part of a pickup belt incorporated in the mail feeding device of FIG. 1;
FIG. 4 is a schematic view illustrating the structure of the essential part of a mail feeding device with a pressure adjustment unit according to a non-claimed first embodiment;
FIG. 5 is a graph illustrating variations in the internal pressure of a negative-pressure chamber that occur when the pressure adjustment unit of FIG. 4 is used;
FIG. 6 is a schematic view illustrating the structure of the essential part of a mail feeding device with a pressure adjustment unit according to a second embodiment forming part of the invention;
FIG. 7 is a graph illustrating variations in the internal pressure of a negative-pressure chamber that occur when the pressure adjustment unit of FIG. 6 is used;
FIG. 8 is a schematic view illustrating a modification of the pressure adjustment unit of FIG. 6;
FIG. 9 is a graph illustrating variations in the internal pressure of a negative-pressure chamber that occur when the pressure adjustment unit of FIG. 8 is used;
FIG. 10 is a schematic view illustrating the structure of the essential part of a mail feeding device with a pressure adjustment unit according to a third embodiment of the invention;
FIG. 11 is a schematic view illustrating the structure of the essential part of a mail feeding device with a pressure adjustment unit according to a fourth embodiment of the invention;
FIG. 12 is a graph illustrating variations in the internal pressure of a negative-pressure chamber that occur when the pressure adjustment unit of FIG. 11 is used;
FIG. 13 is a schematic view illustrating the structure of the essential part of a mail feeding device with a pressure adjustment unit according to a fifth embodiment of the invention; and
FIG. 14 is a graph illustrating variations in the internal pressure of a negative-pressure chamber that occur when the pressure adjustment unit of FIG. 13 is used.

Embodiments of the invention will be described in detail with reference to the accompanying drawings.

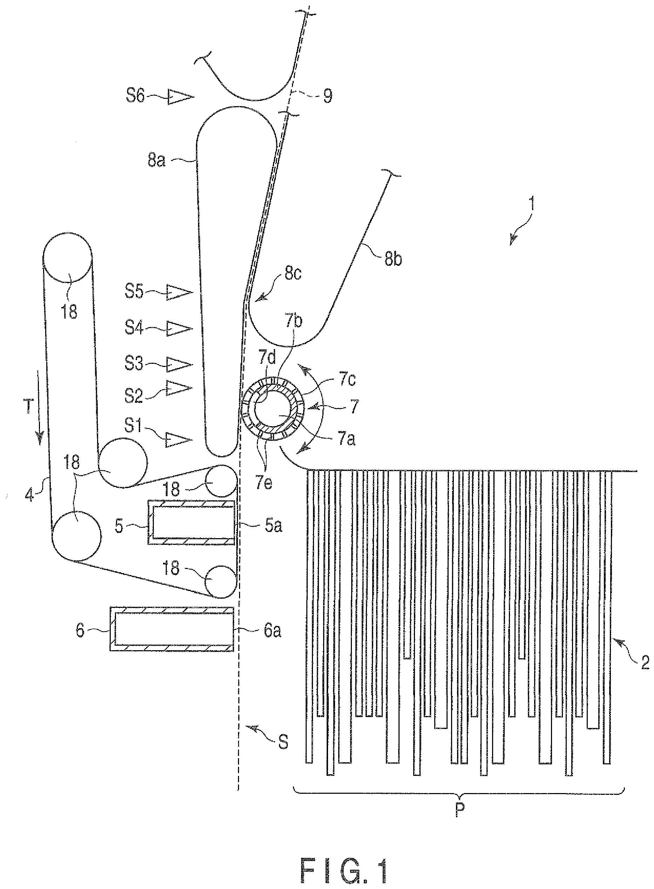

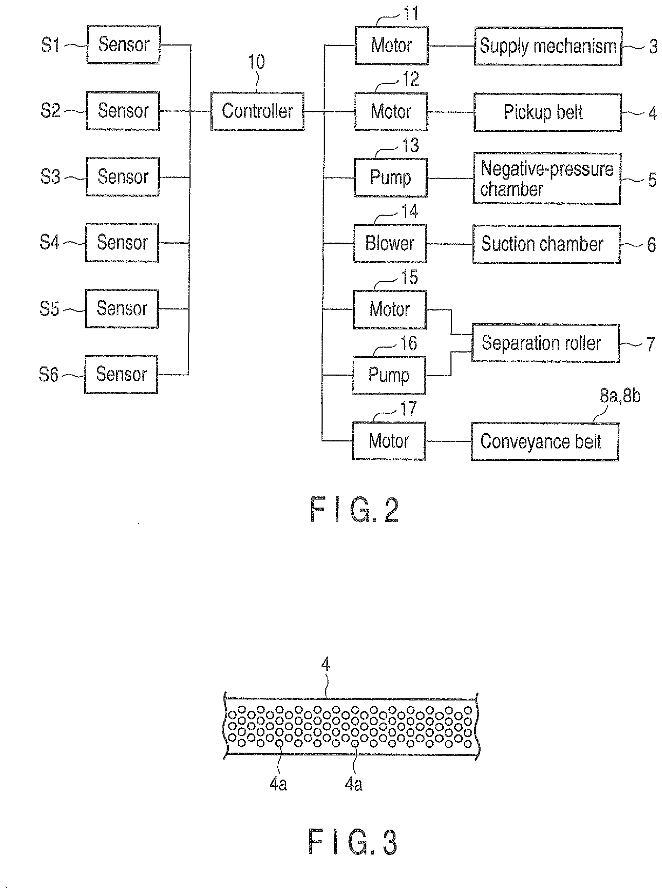

FIG. 1 is a schematic plan view taken from above and illustrating a mail feeding device 1 (hereinafter, "feeding device 1") according to the embodiments of the invention. FIG. 2 is a block diagram illustrating a control system for controlling the operation of the feeding device 1.

The feeding device 1 comprises an inlet unit 2, a supply mechanism 3, a pickup belt 4 (pickup member), a negative-pressure chamber 5, a suction chamber 6, a separation roller 7, conveyance belts 8a and 8b, sensors S1 to S6, and a controller 10 for controlling the operation of the entire feeding device. The conveyance belts 8a and 8b and a motor 17, described later, cooperate to function as a conveyance section in the invention. The sensor S5 functions as a detection unit in the invention. A pump 16, described later, connected to the separation roller 7 also functions as an air supply unit in the invention.

The controller 10 is connected to the sensors S1 to S6, a motor 11 for driving a floor belt and a backup belt (not shown) incorporated in the supply mechanism 3, a motor 12 for running the pickup belt 4 in the direction indicated by arrow T, a pump 13 (drawing means) for drawing air from the negative-pressure chamber 5, a pump 16 for causing negative pressure to occur around the separation roller 7, and a motor 17 for running conveyance belts 8a and 8b.

The inlet unit 2 receives a plurality of mail items P in an accumulated and upright state. The mail items P received in the inlet unit 2 are moved to one side of the unit 2 (leftward in FIG. 1) and then to a pickup position S one by one by the supply mechanism 3. Whenever each mail item P supplied to the pickup position S is picked up, the supply mechanism 3 operates to guide, to the pickup position S, a subsequent one of the mail items P accumulated at the one side of the unit 2.

The pickup belt 4 is wound on a plurality of pulleys 18 and made to run endlessly. Part of the pickup belt 4 is brought into contact with each mail item P guided to the pickup position S, and made to run at a constant rate in a direction parallel to the surface of each mail item P, i.e., in the pickup direction T (upward in FIG. 1). The negative-pressure chamber 5 is provided inside the pickup belt 4, opposing the pickup position S with the pickup belt 4 interposed therebetween.

As shown in FIG. 3, the pickup belt 4 has a plurality of suction holes 4a formed therein. The negative-pressure chamber 5 has an opening 5a opposing the reverse side of the pickup belt 4. In this structure, when air is drawn from the negative-pressure chamber 5 by running the pickup belt 4, negative pressure is applied to each mail item P positioned at the pickup position S through the opening 5a of the negative-pressure chamber 5 and the suction holes 4a of the pickup belt 4, thereby holding each mail item P on the pickup belt 4 by negative pressure. Thus, each mail item P held by the pickup belt 4 is picked up from the pickup position S in accordance with the running of the pickup belt 4.

Each mail item P picked up from the pickup position S is conveyed upward in FIG. 1 via a conveyance path 9, and transferred to the conveyance section 8. The sensors S1 to S6 provided along the conveyance path 9 are transmissive optical sensors (only one of the components of each sensor is shown). These sensors detect whether each mail item P crosses their optical axes (when it crosses their optical axes, they output a signal indicating "darkness"), and detect whether each mail item P does not exist on the optical axes (when it does not exist on their optical axes, they output a signal indicating "brightness"). Namely, the sensors S1 to S6 detect the leading and rear ends of each mail item P with respect to the direction of conveyance.

The suction chamber 6 is provided upstream (at the lower position in FIG. 1) of the pickup belt 4 with respect to the direction in which each mail item P is picked up, and has an opening 6a opposing the pickup position S. When a blower 14 is operated, air is drawn through the opening 6a of the suction chamber 6, thereby causing an air flow at the pickup position S. The air flow functions to quickly draw each mail item P received in the inlet unit 2 and fed to the above-mentioned one side (left side) of the inlet unit 2.

The separation roller 7 is provided downstream of the pickup position S with respect to the mail pickup direction, and opposes the pickup belt 4 with the conveyance path 9 interposed therebetween. The separation roller 7 includes a substantially cylindrical core 7b with a chamber 7a defined therein, and a substantially cylindrical sleeve 7c rotatably provided on the outer periphery of the core 7b. The core 7b has an opening 7d fixedly opening to the conveyance path 9. The sleeve 7c has a plurality of suction holes 7e. With this structure, when the pump 16 is operated to draw air from the chamber 7a of the core 7b, negative pressure occurs at the periphery of the separation roller 7 via the suction holes 7e of the sleeve 7c that rotates around the core 7b.

Namely, by applying, to the sleeve 7c, separation torque that exerts in a direction opposite to the mail pickup direction, using the motor 15, and causing negative pressure around the outer periphery of the sleeve 7c, using the pump 16, a few mail items P picked up unintentionally simultaneously with a leading mail item P when the leading mail item is picked up from the pickup position S can be separated from the leading mail item.

The conveyance belt 8a, an endless belt, is tensioned (at the left side in FIG. 1), opposing the separation roller 7 with the conveyance path 9 interposed therebetween. Further, the conveyance belt 8b is tensioned, opposing the conveyance belt 8a with the conveyance path 9 interposed therebetween. Thus, the conveyance path 9 located downstream of the separation roller 7 is defined between the two conveyance belts 8a and 8b. The front end of each mail item P picked up from the pickup position S is nipped by the nip 8c of the conveyance belts 8a and 8b, and conveyed to the downstream side by the conveyance belts 8a and 8b (conveyance section).

A description will now be given of the operation of feeding, one by one onto the conveyance path 9, a plurality of mail items P received in the inlet unit 2.

When a plurality of mail items P are fed from the inlet unit 2 to the feeding device 1, they are sequentially supplied by the supply mechanism 3 to the pickup position S, and are drawn by the pickup belt 4 and fed onto the conveyance path 9. The mail items P conveyed through the conveyance path 9 are monitored in conveyance position and state by the sensors S1 to S6.

When each mail item P is picked up, the pump 13 is operated to draw air from the negative-pressure chamber 5, thereby generating negative pressure on the surface of the pickup belt 4. Further, an air flow directed to the pickup position S is always applied by the suction chamber 6 to the mail item P earliest accumulated in the inlet unit 2 (i.e., the leftmost one in FIG. 1). Namely, the earliest accumulated mail item is quickly positioned at the pickup position, and picked up by the pickup belt 4 by a suction force.

The mail item P picked up from the pickup position S is guided to the nip 8c of the conveyance belts 8a and 8b, and then guided to a further downstream side, with the front end of the mail item nipped by the nip 8c. The fact that the picked mail item P has reached the nip 8c is detected when the output of the sensor S5 is changed from "brightness" to "darkness." At this time, the running rate of the conveyance belts 8a and 8b is set to a value slightly higher than that of the pickup belt 4, which means that the mail item P is pulled out by the conveyance belts 8a and 8b.

When one or more mail items P are picked up simultaneously with a mail item P firstly fed to the pickup position S, the former mail items P are separated from the latter one by the separation roller 7. At this time, negative pressure is produced on the periphery of the separation roller 7, and separation torque is exerted on the sleeve 7c in a direction opposite to the pickup direction. When a single mail item P is normally picked up, the sleeve 7c of the separation roller 7 is rotated in the pickup direction. In contrast, when two or more mail items are simultaneously picked up, the sleeve 7c is rotated in a direction opposite to the above, whereby the second and later mail items are returned and separated from the first mail item.

When superposed mail items P are separated and fed to the conveyance path 9 one by one, as described above, a gap is formed between the adjacent mail items P by executing on/off control of the negative pressure in the negative-pressure chamber 5, or by intermittently running the pickup belt 4. The gap is determined in accordance with the processing rate of mail items P in a processing unit (which is not shown or described) connected to the conveyance path 9 and located downstream of the feeding device 1.

Specifically, to enhance the processing efficiency of the processing unit located downstream and impart a sufficient processing time, it is desirable to control the gap between adjacent mail items to a desired length. However, in the case of the method of forming a gap by intermittently operating the pickup belt 4, it is difficult to highly accurately control the times required for accelerating and decelerating the belt, and hence slippage may occur between the belt and each mail item when the belt is accelerated or decelerated.

Further, to execute on/off control of the negative pressure in the negative-pressure chamber 5 so as to control the gap between mail items, an electromagnetic valve may be employed across a pipe connecting the pump 13 to the negative-pressure chamber 5, and be subjected to on/off control. In this method, however, much time is required to return the negative pressure in the negative-pressure chamber 5 to the atmospheric pressure, since the negative pressure in the negative-pressure chamber 5 remains for a long time even after the drawing of air by the pump 13 is stopped, where a mail item P is left on the belt. Thus, it is difficult for any one of the above methods to control the gap between adjacent mail items to a desired length.

In light of the above, the inventors of the present invention have found a method of attaching a pressure adjustment unit to the negative-pressure chamber 5, thereby positively controlling the negative pressure in the negative-pressure chamber 5 so as to set the gap between adjacent mail items to a desired length. The pressure adjustment units according to embodiments of the invention will be described.

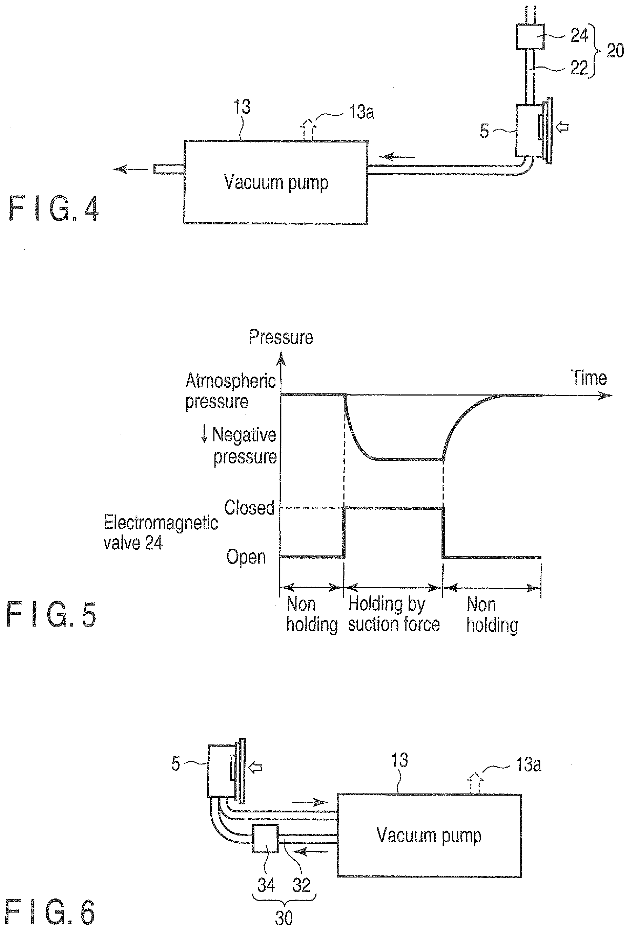

FIG. 4 schematically shows the essential structure of a feeding device 1 with a pressure adjustment unit 20 according to a first non claimed embodiment. This feeding device does not form part of the claimed invention because it does not include an air supply unit configured to positively introduce air into the negative pressure chamber (5), as specified in claim 1. The pressure adjustment unit 20 comprises a suction pipe 22 for feeding air into the negative-pressure chamber 5, and an electromagnetic valve 24 (on/off valve) provided across the suction pipe 22. The electromagnetic valve 24 is on/off controlled by the controller 10.

Thus, in the first non-claimed embodiment, the pump 13 is always operated to keep, at a negative value, the internal pressure of the negative-pressure chamber 5, and the electromagnetic valve 24 is opened when no mail item P should be stuck to the pickup belt 4 by negative pressure. The suction pipe 22 has a large diameter so that when the electromagnetic valve 24 is opened, the amount of air flowing via the suction pipe 22 into the negative-pressure chamber 5, which has its internal pressure kept at a negative value by the pump 13, is much greater than the amount of air drawn by the pump 13.

Specifically, when the front end of a mail item P sticking to the pickup belt 4 and then fed to the conveyance path 9 reaches the sensor 5S, the controller 10 determines that the mail item P is transferred to the nip 8c of the conveyance belts 8a and 8b, and closes the electromagnetic valve 24. In the following description, this timing is referred to as the "first timing." This process enables a leading mail item P to be held by the nip 8c of the conveyance belts 8a and 8b and to be reliably conveyed to the downstream side, and prevents subsequent mail items from sticking to the pickup belt 4 while the leading mail item P is being held by the pickup belt 4. Namely, simultaneous pickup of two or more mail items P can be avoided.

Upon detection of the gap between the leading and subsequent mail items P, the controller 10 opens the electromagnetic valve 24 to enable the subsequent mail item P to be held by the pickup belt 4. Thus, pickup of the subsequent mail item is started. In the following description, this timing will be referred to as the "second timing." The above-mentioned gap can be controlled by adjusting the timing of opening of the electromagnetic valve 24. When one of the sensors S to S4 outputs a signal indicating "brightness," it is determined that a gap has been detected between the leading and subsequent mail items.

As described above, in the first non-claimed embodiment, air is positively introduced into the negative-pressure chamber 5 via the suction pipe 22 by opening the electromagnetic valve 24 at the first timing at which no mail item sticks to the pickup belt 4. This enables negative pressure in the negative-pressure chamber 5 to quickly disappear and hence enables the gap between mail items P to be accurately set to a desired length. As a result, the pickup cycle of mail items P can be shortened, which means that high-speed pickup of mail items P can be realized.

FIG. 5 is a graph illustrating the relationship between variations in the internal pressure of the negative-pressure chamber 5 and the on/off timing of the electromagnetic valve 24 incorporated in the pressure adjustment unit 20. From this graph, it is evident that the internal pressure of the negative-pressure chamber 5 is abruptly reduced immediately after the electromagnetic valve 24 is closed at the second timing. This is because the pump 13 is always operated to draw air from the negative-pressure chamber 5. The pump 13 has a release valve 13a (pressure valve) for preventing the internal pressure of the negative-pressure chamber 5 from excessively reducing. Accordingly, even when the pump 13 is always operated, the internal pressure of the negative-pressure chamber 5 is prevented from reducing permanently.

It is also evident from the graph of FIG. 5 that immediately after the electromagnetic valve 24 is opened at the first timing, the internal pressure of the negative-pressure chamber 5 approaches the atmospheric pressure relatively gently. This is because while the electromagnetic valve 24 is opened to flow air into the negative-pressure chamber 5, the air in the negative-pressure chamber 5 is drawn by the pump 13.

However, the internal pressure of the negative-pressure chamber 5 in the first non claimed embodiment can be increased to the atmospheric pressure more quickly than in the conventional case where an on/off valve is provided across the suction pipe of a pump. Namely, the pressure adjustment unit 20 of the embodiment can instantly increase the internal pressure of the negative-pressure chamber 5 to the atmospheric pressure even when a mail item P blocks the opening 5a of the chamber 5, whereby high-speed pickup of each mail item P can be realized.

FIG. 6 schematically shows the essential part of a feeding device 1 with a pressure adjustment unit 30 according to a second embodiment forming part of the claimed invention. The feeding device 1 with the pressure adjustment unit 30 is similar in basic structure and basic operation to the feeding device 1 with the pressure adjustment unit 20 of the first embodiment, and hence elements similar to those of the first embodiment will not be described in detail.

The pressure adjustment unit 30 comprises an exhaust pipe 32 connecting the exhaust port of the pump 13 for drawing air from the negative-pressure chamber 5, to the chamber 5, and an electromagnetic valve 34 (on/off valve) provided across the exhaust pipe 32. The pressure adjustment unit 30 differs from the pressure adjustment unit 20 of the first embodiment in that the former positively introduces the exhaust air of the pump 13 into the negative-pressure chamber 5.

In the second embodiment, the controller 10 executes on/off control of the electromagnetic valve 34 at the same timing as that of the electromagnetic valve 24. However, in the second embodiment, upon the opening of the electromagnetic valve 34, air is more positively introduced into the negative-pressure chamber 5 than in the first embodiment, and hence the pressure in the negative-pressure chamber 5 can be increased to the atmospheric pressure more quickly than in the first embodiment.

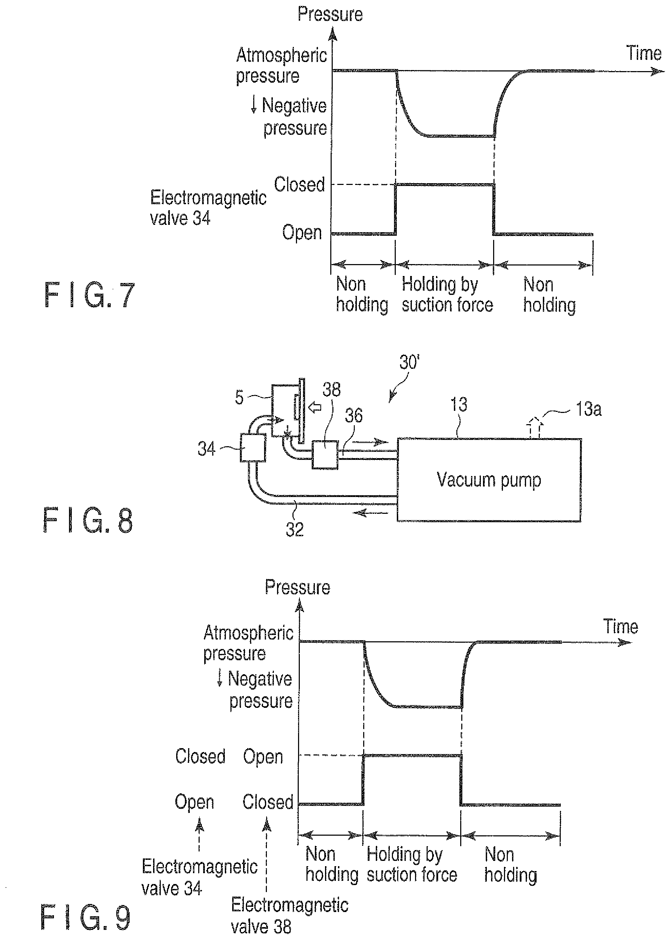

FIG. 7 is a graph illustrating the relationship between variations in the internal pressure of the negative-pressure chamber 5 and the on/off timing of the electromagnetic valve 34 of the pressure adjustment unit 30. From this graph, it is evident that immediately after the electromagnetic valve 34 is opened, the internal pressure of the negative-pressure chamber 5 is more quickly increased to the atmospheric pressure than in the case shown in FIG. 5. Namely, in the second embodiment, the exhaust air of the pump 13 abruptly flows into the negative-pressure chamber 5 upon the opening of the electromagnetic valve 34, with the result that the pressure in the negative-pressure chamber 5 is instantly increased to the atmospheric pressure.

FIG. 8 shows the essential part of a feeding device 1 with a pressure adjustment unit 30' according to a modification of the above-described second embodiment. In this modification, an electromagnetic valve 38 is additionally provided across a suction pipe 36 that connects the suction port of the pump 13 to the negative-pressure chamber 5. Except for the electromagnetic valve 38 provided across the suction pipe 36, the modification has the same structure as the second embodiment. No description will be given of the similar elements.

In the modification, when picking up a mail item P, the controller 10 closes the electromagnetic valve 34 of the exhaust pipe 32 and opens the electromagnetic valve 38 of the suction pipe 36, thereby causing the pickup belt 4 to hold a mail item P by a suction force and then feeding the item to the conveyance path 9.

At first timing at which the front end of the picked mail item P reaches the nip 8c of the conveyance belts 8a and 8b, the controller 10 opens the electromagnetic valve 34 of the exhaust pipe 32 and closes the electromagnetic valve 38 of the suction pipe 36. As a result, the pressure in the negative-pressure chamber 5 is more quickly returned to the atmospheric pressure than in the second embodiment.

Further, at second timing at which a gap is detected between the mail item P and a subsequent one, the controller 10 closes the electromagnetic valve 34 of the exhaust pipe 32 and opens the electromagnetic valve 38 of the suction pipe 36. As a result, the air in the negative-pressure chamber 5 is instantly exhausted, and the subsequent mail item P is picked up instantly. Thus, in the modification, the two electromagnetic valves 34 and 38 are operated in opposite manners.

FIG. 9 is a graph illustrating the relationship between variations in the internal pressure of the negative-pressure chamber 5 and the on/off timing of the electromagnetic valves 34 and 38 of the pressure adjustment unit 30' shown in FIG. 8. From this graph, it is evident that immediately after the electromagnetic valve 34 is opened and the electromagnetic valve 38 is closed, the internal pressure of the negative-pressure chamber 5 is more quickly increased to the atmospheric pressure than in the case shown in FIG. 7. Namely, in the case of using the pressure adjustment unit 30', the exhaust air of the pump 13 abruptly flows into the negative-pressure chamber 5 upon the opening of the electromagnetic valve 34, and the exhaustion of the air in the chamber 5 is stopped upon the closing of the electromagnetic valve 38. As a result, the pressure in the negative-pressure chamber 5 is more quickly increased to the atmospheric pressure.

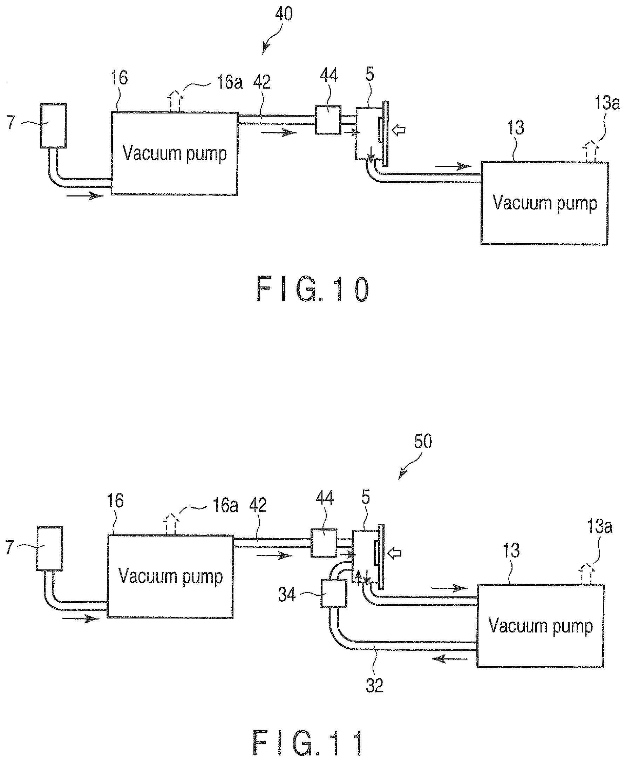

FIG. 10 schematically shows the essential part of a feeding device 1 with a pressure adjustment unit 40 according to a third embodiment. The pressure adjustment unit 40 is characterized in that the exhaust air of a pump 16 is introduced into the negative-pressure chamber 5 at the above-mentioned first timing, instead of introducing the exhaust air of the pump 13 into the negative-pressure chamber 5. This point differs from the pressure adjustment unit 30 of the second embodiment shown in FIG. 6.

In particular, in the third embodiment, the exhaust air of the pump 16, which is used to draw air from the chamber 7a of the core 7b, is also used to return the internal pressure of the negative-pressure chamber 5 to the atmospheric pressure. However, the invention is not limited to this. For instance, the exhaust air of the blower 14, which is used to draw air from the suction chamber 6, may also be used to return the internal pressure of the negative-pressure chamber 5 to the atmospheric pressure. Alternatively, a dedicated air supply unit may be connected to the negative-pressure chamber 5.

When feeding a mail item P, the controller 10 of the feeding device 1 closes an electromagnetic valve 44 (on/off valve) provided across the exhaust pipe 42 of the pump 16, and causes the pump 13 to draw air from the negative-pressure chamber 5. At this time, the pump 16 for generating negative pressure around the separation roller 7 is made to continue its air drawing, and the thus-drawn air is relieved through a relief valve 16a.

After that, the controller 10 opens the electromagnetic valve 44 at the above-mentioned first timing to thereby introduce the exhaust air of the pump 16 into the negative-pressure chamber 5. As a result, the same advantage as in the second embodiment can be provided. Namely, at the first timing, the internal pressure of the negative-pressure chamber 5 can be returned to the atmospheric pressure as quickly as shown in FIG. 7.

FIG. 11 schematically illustrates the structure of the essential part of a mail feeding device 1 with a pressure adjustment unit 50 according to a fourth embodiment of the invention. The pressure adjustment unit 50 has a structure obtained by combining the pressure adjustment units 30 and 40 of the first and third embodiments.

Specifically, the exhaust pipe 32 of the pump 13, which is used to draw air from the negative-pressure chamber 5, is connected to the negative-pressure chamber 5, and the electromagnetic valve 34 is provided across the exhaust pipe 32. Further, the exhaust pipe 42 of the pump 16, which is used to draw air from the separation roller 7, is connected to the negative-pressure chamber 5, and the electromagnetic valve 44 is provided across the exhaust pipe 42. It is a matter of course that also in the fourth embodiment, another device serving as a air feeding device may be connected to the negative-pressure chamber 5, in place of the pump 16.

In the fourth embodiment, when feeding a mail item P, the controller 10 closes the two electromagnetic valves 34 and 44, causes the pump 13 to draw air from the negative-pressure chamber 5, and runs the pickup belt 4 to pick up the mail item P. After that, the controller 10 opens the two electromagnetic valves 34 and 44 at the above-mentioned first timing to instantly return the internal pressure of the negative-pressure chamber 5 to the atmospheric pressure, thereby preventing a subsequent mail item P to be held on the pickup belt 4 by a suction force.

As described above, in the fourth embodiment, the two electromagnetic valves 34 and 44 are simultaneously opened at the above-mentioned first timing to introduce a great amount of air into the negative-pressure chamber 5, whereby the internal pressure of the negative-pressure chamber 5 can be quickly returned to the atmospheric pressure.

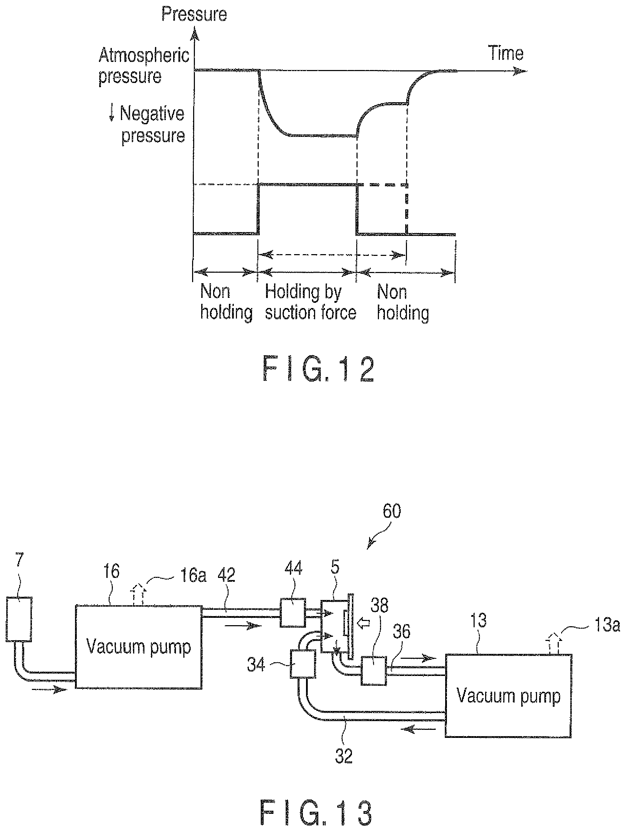

Alternatively, the two electromagnetic valves 34 and 44 may be sequentially opened at the above-mentioned first timing. Namely, a time difference may be imparted between the times of opening the two electromagnetic valves 34 and 44. In this case, for example, the internal pressure of the negative-pressure chamber 5 can be stepwise returned to the atmospheric pressure as shown in FIG. 12.

FIG. 13 schematically illustrates the structure of the essential part of a mail feeding device 1 with a pressure adjustment unit 60 according to a fifth embodiment of the invention. The pressure adjustment unit 60 has a structure obtained by adding the structure of the pressure adjustment unit 30' shown in FIG. 8 to the pressure adjustment unit 50 of the fourth embodiment.

The pressure adjustment unit 60 can instantly return the internal pressure of the negative-pressure chamber 5 to the atmospheric pressure at the first timing, and make the processing efficiency of the feeding device 1 highest. Specifically, at the first timing, the two electromagnetic valves 34 and 44 are opened, and the electromagnetic valve 38 across the suction pipe 36 of the pump 13 is closed, whereby a great amount of air can be introduced into the negative-pressure chamber 5 with the drawing of air from the chamber 5 stopped. As a result, the internal pressure of the negative-pressure chamber 5 can be instantly returned to the atmospheric pressure.

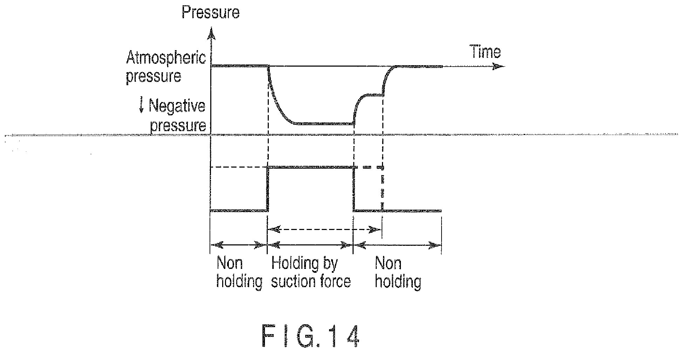

FIG. 14 is a graph illustrating variations in the internal pressure of the negative-pressure chamber 5 that occur when the pressure adjustment unit 60 is used. Also in the fifth embodiment, the two electromagnetic valves 34 and 44 can be sequentially opened at the first timing, and hence the degree of freedom of use of the feeding device 1 is high, as in the fourth embodiment. Yet further, it can be understood from FIGS. 12 and 14 that when the two electromagnetic valves 34 and 44 are stepwise opened at the first timing, the internal pressure of the negative-pressure chamber 5 of the fifth embodiment can be more quickly returned to the atmospheric pressure than that of the fourth embodiment. This is because in the fifth embodiment, when the two electromagnetic valves 34 and 44 are opened, the suction-side electromagnetic valve 38 is closed.

As described above, in the invention, when negative pressure applied to the pickup belt 4 is eliminated to stop holding of a mail item P, air is positively introduced into the negative-pressure chamber 5, thereby instantly eliminating the negative pressure. Accordingly, the invention is free from an undesired phenomenon in which the negative pressure cannot completely be eliminated and the pickup belt 4 undesirably holds a subsequently mail item by the remaining negative pressure. In the invention, each mail item P can be held by the pickup belt 4 at desired timing, and hence the pickup cycle of mail items P can be shortened and a reliable gap can be set between subsequent mail items P.

For instance, in the above-described fourth and fifth embodiments, at the first timing, the exhaust air of the pump 13, which is used to draw air from the negative-pressure chamber 5, is returned into the chamber 5, and air is further fed into the chamber through another air feeding device (e.g., the pump 16) connected to the chamber 5. However, the invention is not limited to this structure. Yet another air feeding device may be connected to the chamber 5 to feed a greater amount of air into the same.

In addition, although the above-described embodiments employ the endless pickup belt 4 as a pickup member for picking up each mail item P supplied to the pickup position S, another type of pickup member may be used. For example, this pickup member may be formed of a rotor with a plurality of suction holes that rotates in a direction in which the mail items are picked up.

## Claims

1. A mail feeding device comprising:
a pickup member (4) including suction holes (4a) formed therein, and configured to run along one of accumulated mail items (P) in a direction in which the one mail item (P) is picked up, the one mail item (P) being accumulated earliest and positioned at a pickup position;
a negative-pressure chamber (5) including an opening which opposes the pickup position with the pickup member (4) interposed therebetween, the negative-pressure chamber (5) applying negative pressure, via the suction holes (4a), to the one mail item (P) positioned at the pickup position, thereby making the one mail item (P) to be held by the pickup member (4);
drawing means (13) which draws air from the negative-pressure chamber (5);
a suction pipe (36) connecting the drawing means (13) to the negative-pressure chamber (5);
a conveyance section (8a, 8b) configured to receive the one mail item (P) held on the pickup member (4) by the negative pressure and picked up from the pickup position, and to convey the picked up mail item (P);
a detector section (S5) configured to detect whether the picked up mail item (P) has been transferred to a conveyance path;
a pressure adjustment unit (13, 16, 30, 30', 40, 50, 60) configured to introduce air into the negative-pressure chamber (5), from which air was drawn by the drawing means (13), to increase internal pressure of the negative-pressure chamber (5) toward atmospheric pressure; and
a controller (10) configured to cause the pressure adjustment unit (13, 16, 30, 30', 40, 50, 60) to increase the internal pressure of the negative-pressure chamber (5) toward atmospheric pressure after the detector section (S5) detects that the picked up mail item (P) has been transferred to the conveyance path,
wherein the pressure adjustment unit (13, 16, 30, 30', 40, 50, 60) includes an air supply unit (13, 16) configured to positively introduce air into the negative-pressure chamber (5),
**characterized in that** the pressure adjustment unit (13, 16, 30, 30', 40, 50, 60) further includes:
an air supply pipe (32, 42) provided separately from the suction pipe (36), the air supply pipe (32, 42) connecting the air supply unit (13, 16) to the negative-pressure chamber (5), and
an on/off valve (34, 44) provided across the air supply pipe (32, 42), the controller (10) executing on/off control of the on/off valve (34, 44).

2. The mail feeding device according to claim 1, wherein the drawing means (13) and the air supply unit (13, 16) are constituted by the same pump (13).

3. The mail feeding device according to claim 1, wherein the drawing means (13) and the air supply unit (13, 16) are respectively constituted by different pumps (13, 16).

4. The mail feeding device according to claim 1, **characterized in that** the pressure adjustment unit includes an exhaust pipe (32) which connects an exhaust port of the drawing means to the negative-pressure chamber, and an on/off valve (34) provided across the exhaust pipe, the controller executing on/off control of the on/off valve.

5. The mail feeding device according to claim 4, **characterized in that** the pressure adjustment unit (13, 16, 30, 30', 40, 50, 60) includes an on/off valve (38) provided across the suction pipe (36) which connects a suction port of the drawing means (13) to the negative-pressure chamber (5), and the controller (10) executes on/off control of the on/off valve (34) of the exhaust pipe (32) and the on/off valve (38) of the suction pipe (36) .

6. The mail feeding device according to claim 5, **characterized in that** the controller (10) executes on/off control of the two on/off valves (34, 36) such that the on/off valve (38) of the suction pipe (36) is opened with the on/off valve (34) of the exhaust pipe (32) closed, and the on/off valve (38) of the suction pipe (36) is closed with the on/off valve (34) of the exhaust pipe (32) kept open.

7. The mail feeding device according to claim 1, **characterized by** further comprising a separation unit (7) configured to apply negative pressure to one or more mail items (P) unintentionally fed simultaneously with the one mail (P) item held on the pickup member (4) by the negative pressure of the negative-pressure chamber (5) and picked up from the pickup position, and wherein the air supply unit (13, 16) uses air exhausted from the drawing means (13) which generates negative pressure via the separation unit (7).

8. The mail feeding device according to claim 7, **characterized in that** the pressure adjustment unit further includes an exhaust pipe (42) which connects an exhaust port of the drawing means to the negative-pressure chamber (5), and an on/off valve (44) provided across the exhaust pipe, the controller (10) executing on/off control of the on/off valve (34) provided across the air supply pipe (32), and the on/off valve (44) provided across the exhaust pipe (42).

9. The mail feeding device according to claim 8, **characterized by** further comprising a separation unit (7) configured to apply negative pressure to two or more mail items (P) unintentionally fed simultaneously with the one mail item (P) held on the pickup member (4) by the negative pressure of the negative-pressure chamber (5) and picked up from the pickup position, and wherein the air supply unit (13, 16) uses air exhausted from the drawing means (13) which generates negative pressure via the separation unit (7).

10. The mail feeding device according to claim 9, **characterized in that** the pressure adjustment unit (13, 16, 30, 30', 40, 50, 60) yet further includes an on/off valve (38) provided across a suction pipe (36) which connects a suction port of the drawing means (13) to the negative-pressure chamber (5), and the controller (10) executes on/off control of the on/off valve (44) provided across the air supply pipe (42), the on/ off valve (34) provided across the exhaust pipe (32), and the on/off valve (38) provided across the suction pipe (36).

11. The mail feeding device according to claim 10, **characterized by** further comprising a separation unit (7) configured to apply negative pressure to one or more mail items (P) unintentionally fed simultaneously with the one mail item (P) held on the pickup member (4) by the negative pressure of the negative-pressure chamber (5) and picked up from the pickup position, and wherein the air supply unit (13, 16) uses air exhausted from the drawing means (13) which generates negative pressure via the separation unit (7).

## Patentansprüche

1. Postzuführungsvorrichtung umfassend:
ein Aufnahmeelement (4) mit darin ausgebildeten Ansaugöffnungen (4a), welches eingerichtet ist, in einer Richtung an einer von angesammelten Postsendungen (P) entlang zu laufen, in welcher die eine Postsendung (P) aufgenommen wird, wobei die eine Postsendung (P) zunächst angesammelt und an einer Aufnahmeposition positioniert ist;
eine Unterdruckkammer (5), die eine Öffnung umfasst, die der Aufnahmeposition gegenüberliegt, wobei das Aufnahmeelement (4) dazwischen angeordnet ist, die Unterdruckkammer (5) über die Ansaugöffnungen (4a) Unterdruck auf die eine Postendung (P) ausübt, die an der Aufnahmeposition positioniert ist, wodurch erzielt wird, dass die eine Postsendung (P) durch das Aufnahmeelement (4) gehalten wird;
Saugmittel (13), welches Luft aus der Unterdruckkammer (5) saugt;
eine Ansaugleitung (36), die das Saugmittel (13) mit der Unterdruckkammer (5) verbindet;
einen Transportabschnitt (8a, 8b), der eingerichtet ist, die eine Postendung (P), die an dem Aufnahmeelement (4) durch den Unterdruck gehalten wird und von der Aufnahmeposition aufgenommen ist, entgegenzunehmen und die aufgenommene Postsendung (P) zu transportieren;
einen Erfassungsabschnitt (S5), der eingerichtet ist, zu erfassen, ob die aufgenommene Postsendung (P) auf einen Transportweg überführt wurde;
eine Druckanpassungseinheit (13, 16, 30, 30', 40, 50, 60), die eingerichtet ist, Luft in die Unterdruckkammer (5) einzuleiten, aus welcher Luft durch die Saugmittel (13) gesaugt wurde, damit der Innendruck der Unterdruckkammer (5) in Richtung zu Atmosphärendruck erhöht wird; und
eine Steuereinheit (10), die eingerichtet ist, die Druckanpassungseinheit (13, 16, 30, 30', 40, 50, 60) zu veranlassen, den Innendruck der Unterdruckkammer (5) auf Atmosphärendruck zu erhöhen, nachdem der Erfassungsabschnitt (S5) erfasst, dass die aufgenommene Postsendung (P) an den Transportweg überführt worden ist,
wobei die Druckanpassungseinheit (13, 16, 30, 30', 40, 50, 60) eine Luftversorgungseinheit (13, 16) umfasst, die eingerichtet ist, in die Unterdruckkammer (5) Luft einströmen zu lassen,
**dadurch gekennzeichnet, dass** die Druckanpassungseinheit (13, 16, 30, 30', 40, 50, 60) ferner umfasst:
eine Luftversorgungsleitung (32, 42), die getrennt von der Ansaugleitung (36) vorgesehen ist, wobei die Luftversorgungsleitung (32, 42) die Luftversorgungseinheit (13, 16) mit der Unterdruckkammer (5) verbindet, und
ein Ein-/Ausventil (34, 44), das in der Luftversorgungsleitung (32, 42) angeordnet ist, wobei die Steuereinheit (10) ein Ein-/Ausschalten des Ein-/Ausventils (34,44) steuert.

2. Postzuführungsvorrichtung nach Anspruch 1, wobei
das Saugmittel (13) und die Luftversorgungseinheit (13, 16) durch eine selbe Pumpe (13) ausgebildet sind.

3. Postzuführungsvorrichtung nach Anspruch 1, wobei
das Saugmittel (13) und die Luftversorgungseinheit (13, 16) durch unterschiedliche Pumpen (13, 16) ausgebildet sind.

4. Postzuführungsvorrichtung nach Anspruch 1, **dadurch gekennzeichnet,**
**dass** die Druckanpassungseinheit eine Abluftleitung (32) umfasst, die eine Abluftöffnung der Saugmittel mit der Unterdruckkammer verbindet, und ein Ein-/Ausventil (34), das in der Abluftleitung angeordnet ist, wobei die Steuereinheit ein Ein-/Ausschalten des Ein-/Ausventils steuert.

5. Postzuführungsvorrichtung nach Anspruch 4, **dadurch gekennzeichnet,**
**dass** die Druckanpassungseinheit (13, 16, 30, 30', 40, 50, 60) ein Ein-/Ausventil (38) umfasst, das in der Ansaugleitung (36) angeordnet ist, welche eine Ansaugöffnung der Saugmittel (13) mit der Unterdruckkammer (5) verbindet, wobei die Steuereinheit (10) ein Ein-/Ausschalten des Ein-/Ausventils (34) der Abluftleitung (32) und des Ein-/Ausventils (38) der Ansaugleitung (36) steuert.

6. Postzuführungsvorrichtung nach Anspruch 5, **dadurch gekennzeichnet,**
**dass** die Steuereinheit (10) ein Ein-/Ausschalten der beiden Ein-/Ausventile (34, 36) derart steuert, dass das Ein-/Ausventil (38) der Ansaugleitung (36) bei geschlossenem Ein-/Ausventil (34) der Abluftleitung (32) offen ist und dass das Ein-/Ausventil (38) der Ansaugleitung (36) bei offen gehaltenem Ein-/Ausventil (34) der Abluftleitung (32) geschlossen ist.

7. Postzuführungsvorrichtung nach Anspruch 1, **dadurch gekennzeichnet,**
**dass** die Postzuführungsvorrichtung ferner eine Trenneinheit (7) umfasst, die eingerichtet ist, einen Unterdruck auf eine oder mehrere der Postsendungen (P) auszuüben, die unbeabsichtigterweise gleichzeitig mit der einen Postsendung (P), die auf dem Aufnahmeelement (4) durch den Unterdruck der Unterdruckkammer (5) gehalten wird und von der Aufnahmeposition aufgenommen ist, zugeführt wurden, und wobei die Luftversorgungseinheit (13, 16) Luft benutzt, die von dem Saugmittel (13) ausgestoßen wird, welches über die Trenneinheit (7) Unterdruck erzeugt.

8. Postzuführungsvorrichtung nach Anspruch 7, **dadurch gekennzeichnet,**
**dass** die Druckanpassungseinheit ferner eine Abluftleitung (42) umfasst, die eine Abluftöffnung der Saugmittel mit der Unterdruckkammer (5) verbindet, und ein in der Abluftleitung angeordnetes Ein-/Ausventil (44), wobei die Steuereinheit (10) ein Ein-/Ausschalten des in der Luftversorgungsleitung (32) angeordneten Ein-/Ausventils (34) und des in der Abluftleitung (42) angeordneten Ein-/Ausventils (44) steuert.

9. Postzuführungsvorrichtung nach Anspruch 8, **dadurch gekennzeichnet,**
**dass** die Postzuführungsvorrichtung ferner eine Trenneinheit (7) umfasst, die eingerichtet ist, einen Unterdruck auf zwei oder mehrere der Postsendungen (P) auszuüben, die unbeabsichtigterweise gleichzeitig mit der einen Postsendung (P), die auf dem Aufnahmeelement (4) durch den Unterdruck der Unterdruckkammer (5) gehalten wird und von der Aufnahmeposition aufgenommen ist, zugeführt wurden, und wobei die Luftversorgungseinheit (13, 16) Luft benutzt, die von dem Saugmittel (13) ausgestoßen wird, welches über die Trenneinheit (7) Unterdruck erzeugt.

10. Postzuführungsvorrichtung nach Anspruch 9, **dadurch gekennzeichnet,**
**dass** die Druckanpassungseinheit (13, 16, 30, 30', 40, 50, 60) darüber hinaus ein in der Ansaugleitung (36) angeordnetes Ein-/Ausventil (38) umfasst, welches eine Ansaugöffnung des Saugmittels (13) mit der Unterdruckkammer (5) verbindet, wobei die Steuereinheit (10) ein Ein-/Ausschalten des in der Luftversorgungsleitung (42) angeordneten Ein-/Ausventils (44), des in der Abluftleitung (32) angeordneten Ein-/Ausventils (34), und des in der Ansaugleitung (36) angeordneten Ein-/Ausventils (38) steuert.

11. Postzuführungsvorrichtung nach Anspruch 10, **dadurch gekennzeichnet,**
**dass** die Postzuführungsvorrichtung ferner eine Trenneinheit (7) umfasst, die eingerichtet ist, einen Unterdruck auf eine oder mehrere der Postsendungen (P) auszuüben, die unbeabsichtigterweise gleichzeitig mit der einen Postsendung (P), die auf dem Aufnahmeelement (4) durch den Unterdruck der Unterdruckkammer (5) gehalten wird und von der Aufnahmeposition aufgenommen ist, zugeführt wurden, und wobei die Luftversorgungseinheit (13, 16) Luft benutzt, die von dem Saugmittel (13) ausgestoßen wird, welches über die Trenneinheit (7) Unterdruck erzeugt.

## Revendications

1. Dispositif d'acheminement de courrier, comprenant :
un élément de capture (4) doté de trous d'aspiration (4a) formés dans ce dernier, et conçu pour passer le long d'un objet de correspondance parmi des objets de correspondance accumulés (P) dans un sens dans lequel est capturé ledit objet de correspondance (P), ledit objet de correspondance (P) ayant été accumulé le premier et ayant été placé au niveau d'une position de capture ;
une chambre à pression négative (5) comprenant une ouverture qui se trouve en regard de la position de capture, l'élément de capture (4) étant interposé entre elles, la chambre à pression négative (5) appliquant une pression négative, par le biais des trous d'aspiration (4a), à l'objet de correspondance (P) placé au niveau de la position de capture, provoquant ainsi un maintien dudit objet de correspondance (P) par l'élément de capture (4) ;
un moyen d'extraction (13) qui extrait de l'air de la chambre à pression négative (5) ;
une conduite d'aspiration (36) reliant le moyen d'extraction (13) et la chambre à pression négative (5) ;
une section de transport (8a, 8b) conçue pour recevoir ledit objet de correspondance (P) maintenu sur l'élément de capture (4) par la pression négative et capturé à partir de la position de capture, et pour transporter l'objet de correspondance capturé (P) ;
une section de détecteur (S5) conçue pour détecter si l'objet de correspondance capturé (P) a été, ou non, transféré vers un trajet de transport ;
une unité de réglage de pression (13, 16, 30, 30', 40, 50, 60) conçue pour introduire de l'air dans la chambre à pression négative (5), de laquelle de l'air a été extrait par le moyen d'extraction (13), de façon à augmenter une pression interne de la chambre à pression négative (5) par rapport à la pression atmosphérique ; et
une unité de commande (10) configurée pour amener l'unité de réglage de pression (13, 16, 30, 30', 40, 50, 60) à augmenter la pression interne de la chambre à pression négative (5) par rapport à la pression atmosphérique après la détection, par la section de détecteur (S5), du fait que l'objet de correspondance capturé (P) a été transféré vers le trajet de transport,
dans lequel l'unité de réglage de pression (13, 16, 30, 30', 40, 50, 60) comprend une unité d'alimentation en air (13, 16) conçue pour une introduction positive d'air dans la chambre à pression négative (5),
**caractérisé en ce que** l'unité de réglage de pression (13, 16, 30, 30', 40, 50, 60) comprend en outre :
une conduite d'alimentation en air (32, 42) disposée séparément de la conduite d'aspiration (36), la conduite d'alimentation en air (32, 42) reliant l'unité d'alimentation en air (13, 16) et la chambre à pression négative (5), et
une soupape d'ouverture/fermeture (34, 44) disposée sur la conduite d'alimentation en air (32, 42), l'unité de commande (10) exécutant une commande d'ouverture/fermeture de la soupape d'ouverture/fermeture (34, 44).

2. Dispositif d'acheminement de courrier selon la revendication 1, dans lequel le moyen d'extraction (13) et l'unité d'alimentation en air (13, 16) sont respectivement constitués par la même pompe (13).

3. Dispositif d'acheminement de courrier selon la revendication 1, dans lequel le moyen d'extraction (13) et l'unité d'alimentation en air (13, 16) sont respectivement constitués par des pompes différentes (13, 16).

4. Dispositif d'acheminement de courrier selon la revendication 1, **caractérisé en ce que** l'unité de réglage de pression comprend une conduite d'évacuation (32) qui relie un orifice d'évacuation du moyen d'extraction et la chambre à pression négative, et une soupape d'ouverture/fermeture (34) disposée sur la conduite d'évacuation, l'unité de commande exécutant une commande d'ouverture/fermeture de la soupape d'ouverture/fermeture.

5. Dispositif d'acheminement de courrier selon la revendication 4, **caractérisé en ce que** l'unité de réglage de pression (13, 16, 30, 30', 40, 50, 60) comprend une soupape d'ouverture/fermeture (38) disposée sur la conduite d'aspiration (36) qui relie un orifice d'aspiration du moyen d'extraction (13) et la chambre à pression négative (5), et **en ce que** l'unité de commande (10) exécute une commande d'ouverture/fermeture de la soupape d'ouverture/fermeture (34) de la conduite d'évacuation (32) et de la soupape d'ouverture/fermeture (38) de la conduite d'aspiration (36).

6. Dispositif d'acheminement de courrier selon la revendication 5, **caractérisé en ce que** l'unité de commande (10) exécute une commande d'ouverture/fermeture des deux soupapes d'ouverture/fermeture (34, 36) de sorte que la soupape d'ouverture/fermeture (38) de la conduite d'aspiration (36) s'ouvre conjointement avec la fermeture de la soupape d'ouverture/fermeture (34) de la conduite d'évacuation (32), et que la soupape d'ouverture/fermeture (38) de la conduite d'aspiration (36) se ferme conjointement tandis que la soupape d'ouverture/fermeture (34) de la conduite d'évacuation (32) reste ouverte.

7. Dispositif d'acheminement de courrier selon la revendication 1, **caractérisé en ce qu'**il comprend en outre une unité de séparation (7) conçue pour appliquer de façon involontaire une pression négative à un ou plusieurs objets de correspondance (P) acheminés simultanément avec ledit objet de correspondance (P) maintenu sur l'élément de capture (4) par la pression négative de la chambre à pression négative (5) et capturé à partir de la position de capture, et dans lequel l'unité d'alimentation en air (13, 16) utilise l'air d'évacuation du moyen d'extraction (13) qui génère une pression négative par le biais de l'unité de séparation (7).

8. Dispositif d'acheminement de courrier selon la revendication 7, **caractérisé en ce que** l'unité de réglage de pression comprend en outre une conduite d'évacuation (42) qui relie un orifice d'évacuation du moyen d'extraction et la chambre à pression négative (5), et une soupape d'ouverture/fermeture (44) disposée sur la conduite d'évacuation, l'unité de commande (10) exécutant une commande d'ouverture/fermeture de la soupape d'ouverture/fermeture (34) disposée sur la conduite alimentation en air (32), et de la soupape d'ouverture/fermeture (44) disposée sur la conduite d'évacuation (42).

9. Dispositif d'acheminement de courrier selon la revendication 8, **caractérisé en ce qu'**il comprend en outre une unité de séparation (7) conçue pour appliquer de manière involontaire une pression négative à deux objets de correspondance (P), ou plus, acheminés simultanément avec ledit objet de correspondance (P) maintenu sur l'élément de capture (4) par la pression négative de la chambre à pression négative (5) et capturé à partir de la position de capture, et dans lequel l'unité d'alimentation en air (13, 16) utilise l'air d'évacuation du moyen d'extraction (13) qui génère une pression négative par le biais de l'unité de séparation (7).

10. Dispositif d'acheminement de courrier selon la revendication 9, **caractérisé en ce que** l'unité de réglage de pression (13, 16, 30, 30', 40, 50, 60) comprend en outre une soupape d'ouverture/fermeture (38) disposée sur la conduite d'aspiration (36) qui relie un orifice d'aspiration du moyen d'extraction (13) et la chambre à pression négative (5), et **en ce que** l'unité de commande (10) exécute une commande d'ouverture/fermeture de la soupape d'ouverture/fermeture (44) disposée sur la conduite d'alimentation en air (42), de la soupape d'ouverture/fermeture (34) disposée sur la conduite d'évacuation (32), et de la soupape d'ouverture/fermeture (38) disposée sur la conduite d'aspiration (36).

11. Dispositif d'acheminement de courrier selon la revendication 10, **caractérisé en ce qu'**il comprend en outre une unité de séparation (7) conçue pour appliquer une pression négative de manière involontaire à un ou plusieurs objets de correspondance (P) acheminés simultanément avec ledit objet de correspondance (P) maintenu sur l'élément de capture (4) par la pression négative de la chambre à pression négative (5) et capturé à partir de la position de capture, et dans lequel l'unité d'alimentation en air (13, 16) utilise l'air d'évacuation du moyen d'extraction (13) qui génère une pression négative par le biais de l'unité de séparation (7).
